# FASCICULE DE BREVET EUROPEEN

(11) **EP 3 317 125 B1**
(45) Date de publication et mention de la délivrance du brevet: **11.03.2020**
(21) Numéro de dépôt: 16730403.9
(22) Date de dépôt: 20.06.2016
(51) Int. Cl.: B60C 9/20, B60C 9/28, B60C 9/00

(54) **PNEUMATIQUE COMPORTANT TROIS COUCHES DE TRAVAIL**
REIFEN MIT DREI ARBEITSSCHICHTEN
TYRE COMPRISING THREE WORKING LAYERS

(30) Priorité: 03.07.2015 FR 1556314
(43) Date de publication de la demande: 09.05.2018
(73) Titulaire: Compagnie Générale des Etablissements Michelin, 63000 Clermont-Ferrand (FR)
(72) Inventeur: DEGEORGES, Agnès, 63040 Clermont-Ferrand Cedex 9 (FR); LARDJANE, Aurore, 63040 Clermont-Ferrand Cedex 9 (FR); LAPRA, Laurence, 63040 Clermont-Ferrand Cedex 9 (FR); FRAUX, David, 63040 Clermont-Ferrand Cedex 9 (FR)
(74) Mandataire: Le Cam, Stéphane Georges Elie
(86) Numéro de dépôt international: PCT/EP2016/064230
(87) Numéro de publication internationale: WO 2017/005480

(56) Documents cités:
- WO-A1-99/06227
- WO-A1-2004/076206
- WO-A1-2007/003550

## Description

La présente invention concerne un pneumatique, à armature de carcasse radiale et plus particulièrement un pneumatique destiné à équiper des véhicules portant de lourdes charges, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique. Une telle armature de sommet de pneumatique est par exemple décrite dans le document WO2004/076206 A1.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les fils ou câbles métalliques, les mesures de force à la rupture (charge maximale en N), de résistance à la rupture (en MPa) et d'allongement à la rupture (allongement total en %) sont effectuées en traction selon la norme ISO 6892 de 1984.

Certains pneumatiques actuels, dits "routiers", sont destinés à rouler à des vitesses moyennes élevées et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre. Cette augmentation de la durée de vie en termes kilométriques, conjuguée au fait que de telles conditions d'usage sont susceptibles de se traduire, sous forte charge, par des températures sommet relativement élevées, nécessite une augmentation au moins proportionnelle du potentiel d'endurance de l'armature sommet des pneumatiques.

Il existe en effet des contraintes au niveau de l'armature de sommet et plus particulièrement des contraintes de cisaillement entre les couches de sommet qui, dans le cas d'une trop forte élévation de la température de fonctionnement au niveau des extrémités de la couche de sommet axialement la plus courte, ont pour conséquence l'apparition et la propagation de fissures dans la gomme au niveau desdites extrémités. Le même problème existe dans le cas de bords de deux couches d'éléments de renforcement, ladite autre couche n'étant pas obligatoirement radialement adjacente à la première.

Dans le but d'améliorer l'endurance de l'armature sommet des pneumatiques, la demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

En complément, la demande française WO 99/24269 propose notamment, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

La couche d'éléments de renforcement circonférentiels est usuellement constituée par au moins un câble métallique enroulé pour former une spire dont l'angle de pose par rapport à la direction circonférentielle est inférieur à 8°. Les câbles initialement fabriqués sont enduits d'un mélange caoutchouteux avant d'être mis en place. Ce mélange caoutchouteux vient ensuite pénétrer le câble sous l'effet de la pression et de la température lors de la cuisson du pneumatique.

Les résultats ainsi obtenus en termes d'endurance et d'usure lors de roulages prolongés sur routes à grande vitesse sont le plus souvent satisfaisants. Toutefois, il apparaît que dans certaines conditions de roulage, certains pneumatiques présentent parfois une usure plus prononcée sur une partie de leur bande de roulement. Ce phénomène s'accentue lorsque la largeur de la bande de roulement augmente.

En outre, quelles que soient les solutions envisagées telles que présentées précédemment, la présence d'une couche d'éléments de renforcement supplémentaire conduit à une masse plus importante du pneumatique et à des coûts de fabrication des pneumatiques plus importants.

Le document WO 10/069676 propose une couche d'éléments de renforcement circonférentiels répartis selon un pas variable. Selon les pas choisis, plus espacés dans les parties centrales et intermédiaires de la couche d'éléments de renforcement circonférentiels, il est possible de réaliser des pneumatiques dont les performances en termes d'endurance sont satisfaisantes avec des performances en termes d'usure améliorées. En outre, par rapport à un pneumatique comportant une couche d'éléments de renforcement circonférentiels répartis selon un pas constant, il est possible de diminuer la masse et le coût de tels pneumatiques bien qu'il soit nécessaire de combler l'absence d'éléments de renforcement par des masses polymériques.

Par ailleurs, l'usage de pneumatiques sur des véhicules pour poids-lourds de type « approche chantier » conduit les pneumatiques à subir des chocs lors de roulages sur des sols caillouteux. Ces chocs sont bien entendu néfastes quant aux performances en termes d'endurance

Un but de l'invention est de fournir des pneumatiques pour véhicules "Poids-Lourds", de type « approche chantier », dont les performances d'usure sont conservées et dont les performances d'endurance sont améliorées notamment au regard des chocs subis lors de roulages sur des sols caillouteux.

Ce but est atteint selon l'invention par un pneumatique à armature de carcasse radiale pour véhicule de type poids lourd comprenant une armature de sommet comportant trois couches de sommet de travail d'éléments de renforcement, elle-même coiffée radialement d'une bande de roulement, ladite bande de roulement étant réunie à deux bourrelets par l'intermédiaire de deux flancs, les éléments de renforcement des deux couches de travail radialement les plus extérieures étant croisés d'une couche à l'autre en faisant avec la direction circonférentielle des angles compris entre 20 et 45°, les angles, formés avec la direction circonférentielle, des éléments de renforcement de la couche de travail radialement la plus intérieure étant compris entre 15 et 20°, les éléments de renforcement des deux couches de travail radialement les plus intérieures étant orientés selon la même direction par rapport à la direction circonférentielle, la différence entre les angles des éléments de renforcement des couches de travail radialement les plus intérieures étant supérieure à 10°, les largeurs des deux couches de travail radialement les plus extérieures étant supérieures à 0.7 fois la largeur de la bande de roulement et la largeur de la couche de travail radialement la plus intérieure étant strictement inférieure à 0.7 fois la largeur de la bande de roulement.

De préférence selon l'invention, la différence entre les valeurs absolues des angles des éléments de renforcement des couches de travail radialement les plus extérieures est supérieure à 45°.

Les largeurs axiales des couches d'éléments de renforcement sont mesurées sur une coupe transversale d'un pneumatique, le pneumatique étant donc dans un état non gonflé.

La largeur axiale de la bande de roulement est mesurée entre deux extrémités d'épaulement lorsque le pneumatique est monté sur sa jante de service et gonflé à sa pression nominale.

Une extrémité d'épaulement est définie, dans la zone de l'épaule du pneumatique, par la projection orthogonale sur la surface extérieure du pneumatique de l'intersection des tangentes aux surfaces d'une extrémité axialement extérieure de la bande de roulement (sommet des sculptures) d'une part et de l'extrémité radialement extérieure d'un flanc d'autre part.

Les mesures d'angles sont selon l'invention réalisées au niveau du plan médian circonférentiel.

Les résultats obtenus avec des pneumatiques conformes à l'invention ont effectivement mis en évidence que les performances en termes d'endurance sont améliorées pour ce qui concerne les résultats observés lors de roulage sur sol caillouteux.

Les inventeurs ont su mettre en évidence que l'association des trois nappes de travail selon l'invention permet d'assouplir le sommet et est donc favorable à une amélioration des performances d'endurance notamment lors de roulages de type « approche chantier ». En effet, en comparaison des architectures plus usuelles de ce type de pneumatique, la présence d'une couche de travail radialement la plus intérieure dont les éléments de renforcement sont orientés dans le même sens que les éléments de renforcement de la couche de travail radialement à son contact avec un angle formé avec la direction circonférentielle plus petit permet de diminuer sensiblement les contraintes supportées par les couches de travail radialement les plus extérieures. En outre, la largeur de cette couche de travail, radialement la plus intérieure, plus petite que celles des deux autres couches permet d'éviter tous risques de clivage à ses extrémités.

Les inventeurs proposent ainsi deux couches de travail radialement les plus extérieures dont les angles formés entre les éléments de renforcement et la direction circonférentielle peuvent être plus grands que les angles usuellement appliqués pour les couches de travail de ce type de pneumatique. Cette ouverture des angles par rapport à la direction circonférentielle pour ce qui concerne les deux couches de travail radialement les plus extérieures conduit à un assouplissement du sommet du pneumatique. Cet assouplissement du sommet du pneumatique associé à la diminution des contraintes supportées par les deux couches radialement les plus extérieures permet une amélioration des performances d'endurance en comparaison de pneumatiques de conception plus usuelles.

Selon une variante avantageuse de l'invention, les éléments de renforcement d'au moins une couche de travail sont des câbles comprenant une couche interne de M fil(s) interne(s) et une couche externe de N fils externes, la couche externe étant enroulée autour de la couche interne.

De préférence selon cette variante avantageuse de l'invention, M=1 ou 2 et N=5, 6, 7, 8 ou 9, de préférence M=1 et N=5 ou 6, ou M=2 et N=7, 8 ou 9.

Avantageusement encore selon cette variante de l'invention, au moins un des fils interne ou externe, de préférence chaque fil interne et externe, de chaque câble d'au moins une couche de travail est au moins de grade UHT.

Au sens de l'invention, un « fil de grade au moins UHT», est un fil présentant une résistance mécanique à la rupture R exprimée en MPa telle que R ≥ 4180 - 2130xD, D étant le diamètre du fil exprimé en mm.

En d'autre termes, avantageusement selon cette variante l'invention, au moins un des fils interne ou externe, de préférence chaque fil interne et externe, de chaque câble d'au moins une couche de travail présente une résistance mécanique à la rupture R exprimée en MPa telle que R ≥ 4180 - 2130xD, D étant le diamètre du fil exprimé en mm.

De préférence encore selon l'invention, au moins un des fils interne ou externe, de préférence chaque fil interne et externe, de chaque câble d'au moins une couche de travail présente une résistance mécanique à la rupture R exprimée en MPa telle que R ≥ 4400 - 2000xD, D étant le diamètre du fil exprimé en mm

De préférence encore selon l'invention, les éléments de renforcement des trois couches de travail sont des câbles comprenant une couche interne de M fil(s) interne(s) et une couche externe de N fils externes, la couche externe étant enroulée autour de la couche interne, avec M=1 ou 2 et N=5, 6, 7, 8, au moins un des fils interne ou externe, de chaque câble, et de préférence chaque fil interne et externe de chaque câble, présentant une résistance mécanique à la rupture R exprimée en MPa telle que R ≥ 4180 - 2130xD, D étant le diamètre du fil exprimé en mm.

Et préférentiellement encore selon l'invention, les éléments de renforcement des trois couches de travail sont des câbles comprenant une couche interne de M fil(s) interne(s) et une couche externe de N fils externes, la couche externe étant enroulée autour de la couche interne, avec M=1 ou 2 et N=5, 6, 7, 8, au moins un des fils interne ou externe, de chaque câble, et de préférence chaque fil interne et externe de chaque câble, présentant une résistance mécanique à la rupture R exprimée en MPa telle que R ≥ 4400 - 2000xD, D étant le diamètre du fil exprimé en mm.

Selon ces variantes de l'invention, il est possible de réaliser des pneumatiques allégés en comparaison des pneumatiques plus usuels dans lesquels les éléments de renforcement présentent des diamètres plus importants.

Les inventeurs ont su mettre en évidence que cet allègement du pneumatique est liée à une diminution de l'épaisseur de l'armature de sommet du fait de la réduction du diamètre des éléments de renforcement des couches de travail. Cette diminution du diamètre des éléments de renforcement peut en outre s'associer à des épaisseurs de mélange polymérique réduites par rapport à celles des pneumatiques usuels et ainsi une masse globale de l'armature sommet encore réduite par rapport à celle des pneumatiques usuels.

Les inventeurs ont par ailleurs su mettre en évidence qu'il était possible de réduire les distances entre les éléments de renforcement au sein d'une même couche de sommet de travail par rapport à des conceptions plus usuelles sans nuire aux propriétés d'endurance du pneumatique. Il est en effet usuel de maintenir une distance minimum entre les éléments de renforcement d'une même couche de travail pour limiter les phénomènes de propagation de fissures d'un élément à l'autre.

Les inventeurs pensent que la présence de trois couches de travail diminue les risques d'apparition de fissures au niveau des extrémités des couches de travail du fait de la répartition des contraintes entre les couches de travail soumises à des effets de clivage. Cette diminution de l'amorce de fissure conduit ainsi à la possibilité de réduire les distances entre les éléments de renforcement.

Cette diminution des distances entre les éléments de renforcement d'une même couche de travail contribue par ailleurs à une diminution des risques de perforation du sommet du pneumatique.

De préférence selon l'invention, la distance entre les éléments de renforcement, mesurée selon la normale à la direction de la ligne moyenne du fil, est inférieure à 0.80 mm.

La distance entre les éléments de renforcements d'une couche de travail est selon l'invention mesurée au niveau du plan médian circonférentiel.

La combinaison des caractéristiques des couches de travail selon l'invention, notamment de la distance entre les éléments de renforcement et leur diamètre permet de conserver des propriétés de rigidité des couches de travail suffisantes mais inférieures à celles des couches de travail d'un pneumatique de conception plus usuelle pour favoriser l'assouplissement du sommet du pneumatique.

Avantageusement encore selon l'invention, la rigidité par unité de largeur de chacune des couches de sommet de travail est comprise entre 50 et 80 daN/mm.

La rigidité par unité de largeur d'une couche d'éléments de renforcement est déterminée à partir des mesures effectuées sur les éléments de renforcement et de la densité d'éléments de renforcement de la couche, elle-même définie par le nombre d'éléments de renforcement par unité de largeur.

La mesure de densité s'effectue en comptant visuellement le nombre de fils présents sur un échantillon de tissu non déformé d'une largeur de 10 cm. Le nombre de fils comptés est directement la valeur de densité du tissu en fils/dm.

Selon un mode de réalisation avantageux de l'invention, une couche de mélange caoutchouteux est disposée entre au moins les extrémités des deux couches de sommet de travail radialement les plus extérieures.

La couche de mélange caoutchouteux permet d'obtenir un découplage desdites couches de sommet de travail afin de répartir les contraintes de cisaillement sur une plus grande épaisseur. Ces contraintes de cisaillement apparaissent notamment du fait de tensions circonférentielles lors du passage dans l'aire de contact.

Au sens de l'invention des couches couplées sont des couches dont les éléments de renforcement respectifs sont séparés radialement d'au plus 1,5 mm, ladite épaisseur de caoutchouc étant mesurée radialement entre les génératrices respectivement supérieure et inférieure desdits éléments de renforcement.

La présence de cette couche de mélange caoutchouteux permet notamment de contribuer à la limitation des contraintes de cisaillement entre les extrémités des couches de sommet de travail, les rigidités circonférentielles desdites couches de sommet de travail étant nulles à leur extrémité.

Une réalisation préférée de l'invention prévoit encore que l'armature de sommet est complétée radialement à l'extérieur par au moins une couche supplémentaire, dite de protection, d'éléments de renforcement, orientés par rapport à la direction circonférentielle avec un angle compris entre 20° et 45° et de même sens que l'angle formé par les éléments de la couche de travail qui lui est radialement adjacente.

Selon un mode de réalisation de l'invention, les éléments de renforcement de la couche de protection sont des câbles élastiques.

D'autres détails et caractéristiques avantageux de l'invention ressortiront ci-après de la description des exemples de réalisation de l'invention en référence à la figure qui représente une vue méridienne d'un schéma d'un pneumatique selon un mode de réalisation de l'invention.

La figure n'est pas représentée à l'échelle pour en simplifier la compréhension. La figure ne représentent qu'une demi-vue d'un pneumatique qui se prolonge de manière symétrique par rapport à l'axe XX' qui représente le plan médian circonférentiel, ou plan équatorial, d'un pneumatique.

Sur la figure, le pneumatique 1, de dimension 315/80 R 22.5 Y, a un rapport de forme H/S égal à 0,80, H étant la hauteur du pneumatique 1 sur sa jante de montage et S sa largeur axiale maximale. Ledit pneumatique 1 comprend une armature de carcasse radiale 2 ancrée dans deux bourrelets, non représentés sur la figure. L'armature de carcasse 2 est formée d'une seule couche de câbles métalliques. Ils comportent encore une bande de roulement 5.

Sur la figure, l'armature de carcasse 2 est frettée conformément à l'invention par une armature de sommet 4, formée radialement de l'intérieur à l'extérieur :
- d'une première couche de travail 41 formée de câbles métalliques orientés d'un angle égal à 18°,
- d'une deuxième couche de travail 42 formée de câbles métalliques orientés d'un angle égal à 30°,
- d'une troisième couche de travail 43 formée de câbles métalliques orientés d'un angle égal à -22°,
- d'une couche de protection 44 formées de câbles métalliques élastiques E18.23, parallèles aux fils métalliques de la couche de travail 43.

Les câbles métalliques constituant les éléments de renforcement des trois couches de travail sont des câbles de formule 9.30 de type UHT présentant un diamètre de 1.23 mm. Des câbles de type SHT pourraient encore être utilisés. Ils sont répartis dans chacune des couches de travail avec une distance entre les éléments de renforcement, mesurée selon la normale à la direction de la ligne moyenne du fil égale à 0.80 mm.

La largeur axiale L₄₁ de la première couche de travail 41 est égale à 85 mm.

La largeur axiale L₄₂ de la deuxième couche de travail 42 est égale à 119 mm.

La largeur axiale L₄₃ de la troisième couche de travail 43 est égale à 109 mm.

La largeur axiale L₄₄ de la couche de protection 44 est égale à 88 mm.

La largeur axiale de la bande de roulement L₅ est égale à 130 mm.

La masse cumulée des trois couches de travail 41, 42, 43 et de la couche de protection 44, comprenant la masse des câbles métalliques et des mélanges de calandrage, se monte ainsi à 5.8 Kg.

Le pneumatique selon l'invention est comparé à un pneumatique de référence de même dimension qui diffère du pneumatique selon l'invention par son armature de sommet formée radialement de l'intérieur à l'extérieur :
- d'une couche de triangulation formée de câbles métalliques inextensibles 9.28 non frettés, continus sur toute la largeur de la nappe, orientés d'un angle égal à 65°,
- d'une première couche de travail formée de câbles métalliques inextensibles 11.35 non frettés, continus sur toute la largeur de la nappe, orientés d'un angle égal à 26°,
- d'une seconde couche de travail formée de câbles métalliques inextensibles 11.35 non frettés, continus sur toute la largeur de la nappe, orientés d'un angle égal à 18° et croisés aux câbles métalliques de la première couche de travail,
- d'une couche de protection formées de câbles métalliques élastiques 18.23.

Les câbles métalliques inextensibles 11.35 des couches de travail du pneumatique de référence sont répartis dans chacune des couches de travail avec une distance entre les éléments de renforcement, mesurée selon la normale à la direction de la ligne moyenne du fil égale à 1 mm.

La masse cumulée des couches de travail du pneumatique de référence, de la couche de protection et de la couche de triangulation, comprenant la masse des câbles métalliques et des mélanges de calandrage, se monte à 6.6 Kg.

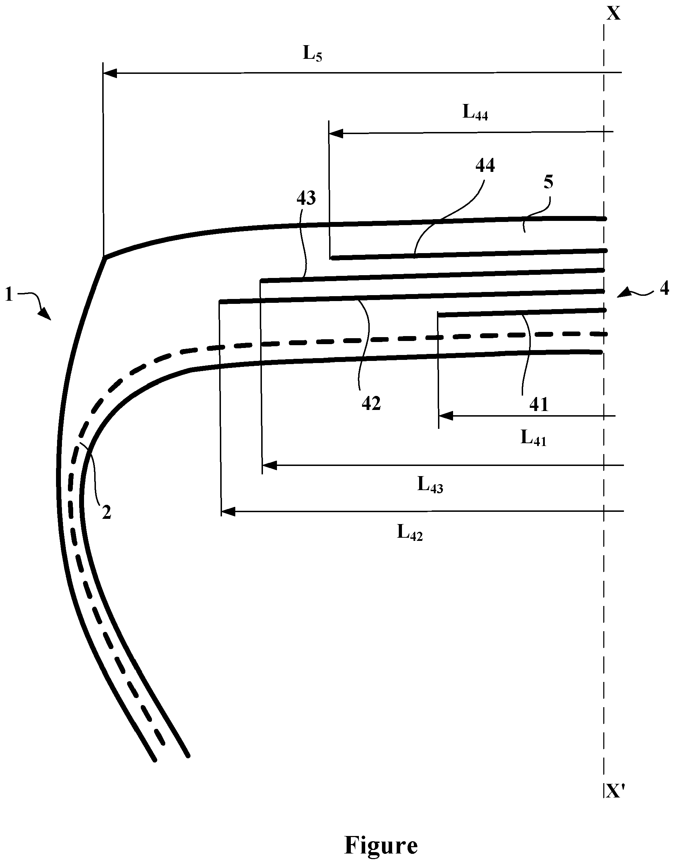

Des essais ont été réalisés avec des pneumatiques réalisés selon l'invention conformément à la figure 1 et avec le pneumatique de référence.

Des premiers essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 4000 Kg progressivement augmentée pour réduire la durée du test.

D'autres essais d'endurance ont été réalisés sur une machine de tests imposant de façon cyclique un effort transversal et une surcharge dynamique aux pneumatiques. Les essais ont été réalisés pour les pneumatiques selon l'invention avec des conditions identiques à celles appliquées aux pneumatiques de référence.

Les essais ainsi réalisés ont montré que les distances parcourues lors de chacun de ces tests sont sensiblement identiques pour les pneumatiques selon l'invention et les pneumatiques de référence. Il apparaît donc que les pneumatiques selon l'invention présentent des performances sensiblement équivalentes en termes d'endurance à celles des pneumatiques de référence lors de roulage sur des sols bitumineux.

Trois tests visant à reproduire des usages de type chantier ont également été réalisés. Pour chacun de ces tests, les mesures illustrées sont ramenées à une base 100 pour le pneumatique de référence.

Un premier test consiste en un roulage sur un obstacle simulant la présence d'une pierre. Les valeurs mesurées correspondent à la hauteur de l'obstacle, exprimées en mm, provoquant une rupture du bloc sommet du pneumatique.

| | |
|---|---|
| Référence | 100 |
| Invention | >140 |

L'essai a été arrêté pour le pneumatique selon l'invention sans voir apparaître la moindre perte de pression.

Le deuxième test consiste en l'enfoncement de polars de forme cylindrique sur la bande de roulement du pneumatique. Les valeurs expriment l'énergie nécessaire pour obtenir la rupture du bloc sommet. Les valeurs sont exprimées à partir d'une base 100 correspondant à la valeur mesurée pour le pneumatique de référence.

| | |
|---|---|
| Référence | 100 |
| Invention | 128 |

Le troisième test est un test de perforation sommet en roulage sur un obstacle simulant la présence d'un clou. Les valeurs expriment la plage d'angles de l'orientation du clou par rapport au plan du sol qui induisent un risque de perforation. Plus la plage est réduite, plus la probabilité de crevaison est faible.

| | |
|---|---|
| Référence | 100 |
| Invention | 80 |

Concernant ce troisième test, la supériorité des pneumatiques selon l'invention comparés aux pneumatiques de référence peut s'interpréter du fait du resserrement des distances entre les éléments de renforcement d'une même couche.

## Revendications

1. Pneumatique à armature de carcasse radiale pour véhicule de type poids lourd comprenant une armature de sommet comportant trois couches de sommet de travail d'éléments de renforcement, elle-même coiffée radialement d'une bande de roulement, ladite bande de roulement étant réunie à deux bourrelets par l'intermédiaire de deux flancs, les éléments de renforcement des deux couches de travail radialement les plus extérieures étant croisés d'une couche à l'autre en faisant avec la direction circonférentielle des angles compris entre 20 et 45°, les largeurs des deux couches de travail radialement les plus extérieures étant supérieures à 0.7 fois la largeur de la bande de roulement, les éléments de renforcement des deux couches de travail radialement les plus intérieures étant orientés selon la même direction par rapport à la direction circonférentielle, la différence entre les angles des éléments de renforcement des couches de travail radialement les plus intérieures étant supérieure à 10°, **caractérisé en ce que** les angles, formés avec la direction circonférentielle, des éléments de renforcement de la couche de travail radialement la plus intérieure sont compris entre 15 et 20° et **en ce que** la largeur de la couche de travail radialement la plus intérieure est strictement inférieure à 0.7 fois la largeur de la bande de roulement.

2. Pneumatique selon la revendication 1, **caractérisé en ce que** la différence entre les valeurs absolues des angles des éléments de renforcement des couches de travail radialement les plus extérieures est supérieure à 45°.

3. Pneumatique selon l'une des revendications 1 ou 2, **caractérisé en ce que** les éléments de renforcement d'au moins une couche de travail sont des câbles comprenant une couche interne de M fil(s) interne(s) et une couche externe de N fils externes, la couche externe étant enroulée autour de la couche interne.

4. Pneumatique selon la revendication 3, **caractérisé en ce que** M=1 ou 2 et N=5, 6, 7, 8 ou 9, de préférence M=1 et N=5 ou 6, ou M=2 et N=7, 8 ou 9.

5. Pneumatique selon l'une des revendications 3 ou 4, **caractérisé en ce qu'**au moins un des fils interne ou externe de chaque câble, de préférence chaque fil interne et externe de chaque câble, présente une résistance mécanique à la rupture R exprimée en MPa telle que R ≥ 4180 - 2130xD, D étant le diamètre du fil exprimé en mm.

6. Pneumatique selon l'une des revendications précédentes, **caractérisé en ce que** les éléments de renforcement des trois couches de travail sont des câbles comprenant une couche interne de M fil(s) interne(s) et une couche externe de N fils externes, la couche externe étant enroulée autour de la couche interne, avec M=1 ou 2 et N=5, 6, 7, 8, et **en ce qu'**au moins un des fils interne ou externe de chaque câble, de préférence chaque fil interne et externe de chaque câble, présente une résistance mécanique à la rupture R exprimée en MPa telle que R ≥ 4180 - 2130xD, D étant le diamètre du fil exprimé en mm.

7. Pneumatique selon l'une des revendications précédentes, **caractérisé en ce que** la rigidité par unité de largeur de chacune des couches de sommet de travail est comprise entre 50 et 80 daN/mm.

8. Pneumatique selon l'une des revendications précédentes, **caractérisé en ce qu'**une couche de mélange caoutchouteux est disposée entre au moins les extrémités des deux couches de sommet de travail radialement les plus extérieures.

9. Pneumatique selon l'une des revendications précédentes, **caractérisé en ce que** l'armature de sommet est complétée radialement à l'extérieur par au moins une nappe supplémentaire, dite de protection, d'éléments de renforcement, orientés par rapport à la direction circonférentielle avec un angle compris entre 20° et 45° et de même sens que l'angle formé par les éléments de renforcement de la couche de sommet de travail qui lui est radialement adjacente.

## Patentansprüche

1. Luftreifen mit radialer Karkassenbewehrung für ein Fahrzeug von der Art Schwerlastwagen, der eine Scheitelbewehrung enthält, die drei Arbeitsscheitelschichten von Verstärkungselementen aufweist, die selbst radial von einem Laufstreifen überdeckt wird, wobei der Laufstreifen über zwei Flanken mit zwei Wülsten vereint wird, wobei die Verstärkungselemente der zwei radial am weitesten außen liegenden Arbeitsschichten sich von einer Schicht zur anderen kreuzen, indem sie mit der Umfangsrichtung Winkel zwischen 20 und 45° bilden, wobei die Breiten der zwei radial am weitesten außen liegenden Arbeitsschichten größer als das 0,7-Fache der Breite des Laufstreifens sind, wobei die Verstärkungselemente der zwei radial am weitesten innen liegenden Arbeitsschichten gemäß der gleichen Richtung bezüglich der Umfangsrichtung ausgerichtet sind, wobei der Unterschied zwischen den Winkeln der Verstärkungselemente der radial am weitesten innen liegenden Arbeitsschichten größer als 10° ist, **dadurch gekennzeichnet, dass** die mit der Umfangsrichtung gebildeten Winkel der Verstärkungselemente der radial am weitesten innen liegenden Arbeitsschicht zwischen 15 und 20° liegen, und dass die Breite der radial am weitesten innen liegenden Arbeitsschicht strikt geringer als das 0,7-Fache der Breite des Laufstreifens ist.

2. Luftreifen nach Anspruch 1, **dadurch gekennzeichnet, dass** die Differenz zwischen den Absolutwerten der Winkel der Verstärkungselemente der radial am weitesten außen liegenden Arbeitsschichten größer als 45° ist.

3. Luftreifen nach einem der Ansprüche 1 oder 2, **dadurch gekennzeichnet, dass** die Verstärkungselemente mindestens einer Arbeitsschicht Kabel sind, die eine innere Schicht von M inneren Drähten und eine äußere Schicht von N äußeren Drähten enthalten, wobei die äußere Schicht um die innere Schicht gewickelt ist.

4. Luftreifen nach Anspruch 3, **dadurch gekennzeichnet, dass** gilt M=1 oder 2 und N=5, 6, 7, 8 oder 9, vorzugsweise M=1 und N=5 oder 6, oder M=2 und N=7, 8 oder 9.

5. Luftreifen nach einem der Ansprüche 3 oder 4, **dadurch gekennzeichnet, dass** mindestens einer der inneren oder äußeren Drähte jedes Kabels, vorzugsweise jeder innere und äußere Draht jedes Kabels, eine derartige mechanische Reißfestigkeit R ausgedrückt in MPa hat, dass gilt R ≥ 4180 - 2130xD, wobei D der Durchmesser des Drahts ausgedrückt in mm ist.

6. Luftreifen nach einem der vorhergehenden Ansprüche, **dadurch gekennzeichnet, dass** die Verstärkungselemente der drei Arbeitsschichten Kabel sind, die eine innere Schicht von M inneren Drähten und eine äußere Schicht von N äußeren Drähten enthält, wobei die äußere Schicht um die innere Schicht gewickelt ist, mit M=1 oder 2 und N=5, 6, 7, 8, und dass mindestens einer der inneren oder äußeren Drähte jedes Kabels, vorzugsweise jeder innere und äußere Draht jedes Kabels, eine derartige mechanische Reißfestigkeit R ausgedrückt in MPa hat, dass gilt R ≥ 4180 - 2130xD, wobei D der Durchmesser des Drahts ausgedrückt in mm ist.

7. Luftreifen nach einem der vorhergehenden Ansprüche, **dadurch gekennzeichnet, dass** die Steifigkeit pro Breiteneinheit jeder der Arbeitsscheitelschichten zwischen 50 und 80 daN/mm liegt.

8. Luftreifen nach einem der vorhergehenden Ansprüche, **dadurch gekennzeichnet, dass** eine Kautschukmischungsschicht zwischen mindestens den Enden der zwei radial am weitesten außen liegenden Arbeitsscheitelschichten angeordnet ist.

9. Luftreifen nach einem der vorhergehenden Ansprüche, **dadurch gekennzeichnet, dass** die Scheitelbewehrung radial außen durch mindestens eine zusätzliche Lage, Schutzlage genannt, von Verstärkungselementen vervollständigt wird, die bezüglich der Umfangsrichtung mit einem Winkel zwischen 20° und 45° und von gleicher Richtung wie der Winkel ausgerichtet sind, der von den Verstärkungselementen der Arbeitsscheitelschicht gebildet wird, die ihr radial benachbart ist.

## Claims

1. Tyre with a radial carcass reinforcement for a vehicle of the heavy duty type comprising a crown reinforcement comprising three working crown layers of reinforcing elements, itself capped radially by a tread, the said tread being connected to two beads by two sidewalls, **in** the reinforcing elements of the two radially outermost working layers being crossed from one layer to the other, making with the circumferential direction angles of between 20 and 45°, the widths of the two radially outermost working layers are greater than 0.7 times the width of the tread, the reinforcing elements of the two radially innermost working layers are oriented in the same direction with respect to the circumferential direction, the difference between the angles of the reinforcing elements of the radially innermost working layers is greater than 10°, **characterized in that** the angles, formed with the circumferential direction, of the reinforcing elements of the radially innermost working layer are between 15 and 20° and **in that** the width of the radially innermost working layer is strictly less than 0.7 times the width of the tread.

2. Tyre according to Claim 1, **characterized in that** the difference between the absolute values of the angles of the reinforcing elements of the radially outermost working layers is greater than 45°.

3. Tyre according to one of Claims 1 and 2, **characterized in that** the reinforcing elements of at least one working layer are cords comprising an internal layer of M internal thread(s) and an external layer of N external threads, the external layer being wound around the internal layer.

4. Tyre according to Claim 3, **characterized in that** M=1 or 2 and N=5, 6, 7, 8 or 9, for preference M=1 and N=5 or 6, or M=2 and N=7, 8 or 9.

5. Tyre according to one of Claims 3 and 4, **characterized in that** at least one of the internal or external threads of each cord, preferably each internal and external thread of each cord, exhibits a mechanical strength at break R expressed in MPa such that R ≥ 4180 - 2130xD, D being the diameter of the thread expressed in mm.

6. Tyre according to one of the preceding claims, **characterized in that** the reinforcing elements of the three working layers are cords comprising an internal layer of M internal thread(s) and an external layer of N external threads, the external layer being wound around the internal layer, with M=1 or 2 and N=5, 6, 7 or 8, and **in that** at least one of the internal or external threads of each cord, and preferably each internal and external thread of each cord, exhibits a mechanical strength at break R expressed in MPa such that R ≥ 4180 - 2130xD, D being the diameter of the thread expressed in mm.

7. Tyre according to one of the preceding claims, **characterized in that** the stiffness per unit width of each of the working crown layers is comprised between 50 and 80 daN/mm.

8. Tyre according to one of the preceding claims, **characterized in that** a layer of rubber compound is arranged between at least the ends of the two radially outermost working crown layers.

9. Tyre according to one of the preceding claims, **characterized in that** the crown reinforcement is supplemented radially on the outside by at least one additional ply, referred to as a protective ply, of reinforcing elements which are oriented with respect to the circumferential direction at an angle of between 20° and 45° and in the same direction as the angle formed by the reinforcing elements of the working crown layer radially adjacent to it.
